# EUROPEAN PATENT APPLICATION

(11) **EP 4 647 932 A1**
(43) Date of publication of application: **12.11.2025**
(21) Application number: 23917112.7
(22) Date of filing: 25.10.2023
(51) Int. Cl.: G06F 16/2453

(54) **DATA QUERY METHOD AND SYSTEM, DEVICE CLUSTER, MEDIUM AND PROGRAM PRODUCT**

(30) Priority: 18.01.2023 CN 202310065306
(71) Applicant: Huawei Cloud Computing Technologies Co., Ltd., Guiyang, Guizhou 550025 (CN)
(72) Inventor: WANG, Yue, Guiyang, Guizhou 550025 (CN)
(74) Representative: Goddar, Heinz J.
(86) International application number: PCT/CN2023/126540
(87) International publication number: WO 2024/152644

(57) **Abstract**

Embodiments of this disclosure provide a database query method and system, a device cluster, a medium, and a program product. In embodiments of this disclosure, in response to receiving a first query request for target data, a first computing node collects statistical information related to the target data. The first computing node stores the collected statistical information as first statistical information in a first shared memory, to update global statistical information in the first shared memory, and sends the first statistical information to a second computing node, for the second computing node to store the first statistical information in a second shared memory, to update global statistical information in the second shared memory. The global statistical information is used to query for statistical information for a query request of a system including a plurality of computing nodes. The plurality of computing nodes include the first computing node and the second computing node. In this way, timeliness of the statistical information can be ensured, and a large quantity of repeated collections can be avoided. This significantly reduces computing overheads.

## Description

This application claims priority to Chinese Patent Application No. 202310065306.4, filed with the China National Intellectual Property Administration on January 18, 2023 and entitled "DATA QUERY METHOD AND SYSTEM, DEVICE CLUSTER, MEDIUM, AND PROGRAM PRODUCT", which is incorporated herein by reference in its entirety.

### TECHNICAL FIELD

This disclosure generally relates to the field of computer technologies, and in particular, to a data query method, a data query system, a computing device cluster, a computer-readable storage medium, and a computer program product.

### BACKGROUND

With rapid development of big data and significant improvement of a computing capability, an amount of updated data in a database is larger. In the database field, to more accurately find target data, an optimizer is usually used to generate an optimal execution plan, to query for the target data based on the optimal execution plan. Currently, there are two types of optimizers: a rule-based optimizer (RBO, Rule-Based Optimizer) and a cost-based optimizer (CBO, Cost-Based Optimizer). In the rule-based optimizer, for a database, an optimal execution plan according to a plurality of groups of pre-coded built-in rules is selected. For example, a unique constraint or a primary key to locate a storage unit is preferably used, or a hash index is preferably used. In the cost-based optimizer, for a database, cost estimation for all possible execution plans of target data is performed, and an optimal execution plan is selected based on a minimum estimated cost. For example, overheads of performing computing processing by a computing device for the target data and overheads of performing communication processing by an input/output device for the target data may be considered in cost estimation.

### SUMMARY

According to some embodiments of this disclosure, a data query method, a data query system, a computing device cluster, a computer-readable storage medium, and a computer program product are provided.

According to a first aspect of this disclosure, a data query method is provided. The method is performed by a system including a plurality of computing nodes. The system includes a first computing node and a second computing node, the first computing node includes a first shared memory, and the second computing node includes a second shared memory. The method includes: In response to receiving a first query request for target data, the first computing node collects statistical information related to the target data; the first computing node stores the collected statistical information as first statistical information in the first shared memory, to update global statistical information in the first shared memory; and the first computing node sends the first statistical information to the second computing node, for the second computing node to store the first statistical information in the second shared memory, to update global statistical information in the second shared memory. The global statistical information is used to query for statistical information for a query request of the system. According to an embodiment of this disclosure, because statistical information collected for querying of target data on a particular computing node can be shared with another computing node, timeliness of the statistical information can be ensured, and a large quantity of repeated collections can be avoided. This significantly reduces computing overheads.

In some embodiments, collecting the statistical information related to the target data further includes: In response to receiving the first query request for the target data, the first computing node determines whether a statement execution count of a data table related to the target data exceeds a predetermined threshold; and the first computing node collects the first statistical information in response to determining that the statement execution count exceeds the predetermined threshold. In some embodiments, the first computing node generates a target execution plan based on the first statistical information; and the first computing node performs at least one of the following: indicating that the first statistical information is newly collected for the target data; indicating that the target execution plan is generated based on the first statistical information newly collected for the target data; indicating a quantity of first statistical information that is included in the target execution plan and that is related to the target data; and indicating a quantity of statistical information that is in the target execution plan and that is newly collected for the target data. Therefore, it can be learned whether the computing node collects latest statistical information and specific content of the latest statistical information for target data in a query request.

In some embodiments, the method further includes: The first computing node generates an execution result for the target data based on a target execution plan; the first computing node performs transaction submission for the first query request in response to generating the execution result; in response to performing the transaction submission, the first computing node updates the global statistical information in the first shared memory based on a pointer of the first statistical information in the first shared memory; the first computing node sends an indication about the transaction submission to the second computing node in response to performing the transaction submission; and the second computing node updates the global statistical information in the second shared memory in response to receiving the indication about the transaction submission from the first computing node. In some embodiments, the method further includes: In response to receiving a second query request for the target data, the first computing node determines whether a statement execution count of a data table related to the target data exceeds a predetermined threshold; the first computing node queries for the first statistical information in response to the statement execution count not exceeding the predetermined threshold; and the first computing node generates a target execution plan based on the found first statistical information, where the target execution plan generated for the second query request is substantially the same as a target execution plan generated for the first query request. Therefore, in a case in which a current computing node has updated global statistical information based on statistical information that is about the target data and that is collected by the computing node, and then receives another query request about the target data, if timeliness of the statistical information about the target data is good, the current computing node may not need to collect statistical information again, but can directly use latest statistical information, to effectively improve query efficiency of the database.

In some embodiments, querying for the first statistical information further includes: The first computing node queries a first local memory for the first statistical information; the first computing node queries a first background work memory for the first statistical information in response to the first statistical information being not found in the first local memory; the first computing node queries the first shared memory for the first statistical information in response to the first statistical information being not found in a second background work memory, for example, queries the global statistical information in the first shared memory for the first statistical information; and the first computing node queries the second background work memory for the first statistical information in response to the first statistical information being not found in the first shared memory. In some embodiments, querying for the first statistical information further includes: The first computing node queries a first local memory for the first statistical information; the first computing node queries the first shared memory for the first statistical information in response to the first statistical information being not found in the first local memory, for example, querying the global statistical information in the first shared memory for the first statistical information; and the first computing node queries a second background work memory for the first statistical information in response to the first statistical information being not found in the first shared memory. In this way, statistical information can be hierarchically queried for, and statistical information that is latest in timeliness can be found preferentially and quickly, to improve query efficiency of the database.

In some embodiments, the first computing node further executes a first background work thread, and the method further includes: The first computing node allocates a first background work memory for the first background work process; and the first computing node stores, in the first background work memory, a pointer that is of the statistical information collected by the first computing node and that is in the first shared memory, and a pointer that is of statistical information received by the first computing node from another computing node in the plurality of computing nodes and that is in the first shared memory. Therefore, statistical information of each computing node is stored in a lock-free queue in the allocated first background work memory by using the first background work process. This does not affect a current query process, so that impact on overall performance of the first computing node can be avoided.

In some embodiments, the first computing node further executes a second background work thread, and the method further includes: The first computing node allocates a second background work memory for the second background work process; the second background work process checks, at predetermined time, whether a statement execution count for each data table in a statistical information system table exceeds a second predetermined threshold, for a data table whose statement execution count exceeds the second predetermined threshold in the statistical information system table; the first computing node collects statistical information related to the data table; and the first computing node updates the statistical information system table based on the collected statistical information related to the data table, where the statistical information system table is stored in the second background work memory. Therefore, the second background operation checks the statistical information of the data table in a polling manner, to avoid poor timeliness caused by the related data not being queried for long time.

In some embodiments, the method further includes: In response to receiving the first query request for the target data, the first computing node determines that a statement execution count does not exceed a predetermined threshold, and queries for second statistical information that is used as statistical information for the target data; the first computing node generates a target execution plan based on the found second statistical information; the first computing node generates an execution result for the target data based on the target execution plan; and the first computing node performs transaction submission for the first query request in response to generating the execution result. Therefore, when the statistical information is not outdated, the existing statistical information can be directly used to generate the execution plan, to improve query efficiency of the database.

In some embodiments, the statement execution count indicates a quantity of records that change after statement insertion, statement deletion, or statement modification is performed for a data table related to the target data. In some embodiments, a pointer of the first statistical information in the first shared memory is further stored in the first shared memory, and updating the global statistical information in the first shared memory includes: deleting, from the global statistical information in the first shared memory, the statistical information related to the target data, and adds the pointer of the first statistical information in the first shared memory to the global statistical information in the first shared memory. In this case, because statistical information that is collected by a single node and that has timeliness is shared with another computing node, and is stored in a shared memory that is on each computing node and that is visible to all processes, only a pointer of the statistical information in the shared memory is provided for each process, so that latest synchronization of statistical information in an entire database system can be implemented. In this way, consistency of query plans in the entire database system is ensured, and performance jitter is reduced.

In some embodiments, the method further includes: The first computing node creates a first process based on the first query request; the first computing node allocates a first local memory for the first process; and the first computing node stores, in the first local memory, a pointer of the statistical information in the first shared memory. Therefore, in a local memory of a current query process, only a pointer of statistical information in a shared memory is stored, so that a required operation can be implemented. This avoids a case in which the statistical information is cleared when the current query process ends.

In some embodiments, the method further includes: The second computing node stores the first statistical information in the second shared memory in response to receiving the first statistical information sent by the first computing node; and the second computing node updates the global statistical information in the second shared memory based on the pointer of the first statistical information in the second shared memory. In some embodiments, the method further includes: The second computing node creates a second process in response to receiving the first statistical information sent by the first computing node; the second computing node allocates a second local memory to the second process; the second computing node stores, in the second shared memory, the first statistical information sent by the first computing node and the pointer of the first statistical information in the second shared memory; and the second computing node stores, in the second local memory, the pointer that is of the first statistical information sent by the first computing node and that is in the second shared memory. In some embodiments, the method further includes: The second computing node receives an indication about transaction submission from the first computing node; the second computing node deletes, from the global statistical information in the second shared memory, the statistical information related to the target data; and the second computing node adds the pointer of the statistical information in the second shared memory to the global statistical information in the second shared memory. Therefore, a single computing node may store, in a shared memory that is of the computing node and that is visible to all processes, statistical information that is shared by another computing node and that has timeliness, so that the computing node can obtain latest statistical information for subsequent query processing, without collecting the statistical information. In this way, latest synchronization of the statistical information of the entire database system can be implemented, so that consistency of the query plans of the entire database system is ensured, and occurrence of performance jitter is reduced.

In some embodiments, the method further includes: In response to receiving a third query request for the target data, the second computing node determines whether a statement execution count of a data table related to the target data exceeds a predetermined threshold; in response to determining that the statement execution count does not exceed the predetermined threshold, the second computing node queries for the first statistical information received from the first computing node; and the second computing node generates a target execution plan for the third query request based on the found first statistical information. The target execution plan generated for the second query request is substantially the same as a target execution plan generated for the first query request. Therefore, in a case in which a current computing node has updated global statistical information based on statistical information that is about the target data and that is obtained by the computing node from another computing node through sharing, and then receives another query request about the target data, if timeliness of the statistical information about the target data is good, the current computing node may not need to collect statistical information again, but can directly use latest statistical information, to effectively improve query efficiency of the database.

According to a second aspect of this disclosure, a data query system is provided. The data query system may include a plurality of computing nodes, the plurality of computing nodes include a first computing node and a second computing node, the first computing node includes a first shared memory, the second computing node includes a second shared memory, and the data query system may include a data query apparatus. The data query apparatus includes: an information collection module, configured to: in response to receiving a first query request for target data, collect, for the first computing node, statistical information related to the target data; an information storage module, configured to store, for the first computing node, the collected statistical information as first statistical information in the first shared memory, to update global statistical information in the first shared memory; and an information sending module, configured to send the first statistical information to the second computing node, for the second computing node to store the first statistical information in the second shared memory, to update global statistical information in the second shared memory. The global statistical information is used to query for statistical information for a query request of the data query system. According to a third aspect of this disclosure, a computing device cluster is provided, including at least one computing device. Each computing device includes a processor and a memory, and the processor of the at least one computing device is configured to execute instructions stored in the memory of the at least one computing device, to enable the computing device cluster to perform the method according to the first aspect of this disclosure. In some embodiments, the computing device cluster includes one computing device. In some other embodiments, the computing device cluster includes a plurality of computing devices. In some embodiments, the computing device may be a server, for example, a central server, an edge server, or a local server in a local data center. In some embodiments, the computing device may alternatively be a terminal device, for example, a desktop computer, a notebook computer, or a smartphone.

According to a fourth aspect of this disclosure, a computer-readable storage medium is provided. The computer-readable storage medium stores instructions, and when the instructions are executed by a computing device, the computing device is enabled to perform the method according to the first aspect of this disclosure. In some embodiments, the computer-readable storage medium may be non-transient. The computer-readable storage medium includes but is not limited to a volatile memory (for example, a random access memory) and a non-volatile memory (for example, a flash memory, a hard disk drive (Hard Disk Drive, HDD), or a solid state drive (Solid State Drive, SSD)).

According to a fifth aspect of this disclosure, a computer program product is provided. The computer program product includes instructions, and when the instructions are executed by a computing device, the computing device is enabled to perform the method according to the first aspect of this disclosure. In some embodiments, the program product may include one or more software installation packages. When the method according to the first aspect or a possible variant thereof needs to be used, the software installation package may be downloaded or copied and executed on a computing device.

It should be understood that the content described in the summary is not intended to limit key or important features of embodiments of this disclosure or limit the scope of this disclosure. Other features of this disclosure will be readily understood through the following descriptions.

### BRIEF DESCRIPTION OF DRAWINGS

With reference to the accompanying drawings and the following detailed descriptions, features, advantages, and other aspects of the implementations of this disclosure become more apparent. Several implementations of this disclosure are shown herein by way of example rather than limitation. In the accompanying drawings:
FIG. 1 is a diagram of an example architecture of a database system according to an embodiment of this disclosure;
FIG. 2A is an example diagram of a data query method according to an embodiment of this disclosure;
FIG. 2B is a further example diagram of a data query method according to an embodiment of this disclosure;
FIG. 3 is an example diagram of another data query method according to an embodiment of this disclosure;
FIG. 4 is an example diagram of still another data query method according to an embodiment of this disclosure;
FIG. 5 is an example diagram of still another data query method according to an embodiment of this disclosure;
FIG. 6 is a block diagram of a data query system according to some embodiments of this disclosure;
FIG. 7 is a block diagram of an example device that may be used to implement an example implementation of this disclosure;
FIG. 8 is a block diagram of an example device cluster that may be used to implement an example implementation of this disclosure; and
FIG. 9 is a block diagram of another example device that may be used to implement an example implementation of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. Other explicit and implicit definitions may also be included below.

It should be understood that in the technical solutions provided in embodiments of this application, some repeated parts may not be described again in the following descriptions of specific embodiments, but it should be considered that these specific embodiments are mutually referenced and may be combined.

The inventor of this disclosure finds through research that, in a rule-based optimizer, because an optimal execution plan is selected according to a plurality of groups of pre-coded built-in rules, an optimization policy cannot be dynamically adjusted for real-time update of data only by relying on a fixed rule. In addition, in a cost-based optimizer, statistical information about a data table in a database is a factor considered for a minimum estimated cost.

For statistical information collection, an asynchronous polling collection manner or a partial temporary collection manner may be considered. In the asynchronous polling collection manner, the database checks all data tables in the database in a polling manner at an interval of a period of time, to determine whether a modification of the data table exceeds a predetermined threshold, and then collects statistical information of the data table whose modification exceeds the predetermined threshold. In addition, in the partial temporary collection manner, the database temporarily collects partial statistical information for a data table related to target data, and deletes the temporarily collected partial statistical information after an execution plan is generated based on the temporarily collected partial statistical information. After further research, the inventor of this disclosure finds that, in the asynchronous polling collection manner, because there is a time interval for asynchronous collection of the statistical information, the statistical information used by the database is not based on latest data of the database. Therefore, actual statistical information used is outdated. As a result, an optimal execution plan cannot be accurately generated. In addition, in the partial temporary collection mode, some temporarily collected statistical information is used for only current query. When a large quantity of queries occur, significant computing overhead is caused, and a large quantity of repeated collections are caused. Further, if the asynchronous polling collection manner is combined with the partial temporary collection manner, and some temporarily collected statistical information is written into the statistical information collected in the asynchronous polling collection manner, a query triggers writing, and a deadlock risk caused by lock upgrade exists.

Therefore, an embodiment of this disclosure provides a data query solution. In the data query solution, the method is performed by a system including a plurality of computing nodes. The system includes a first computing node and a second computing node, the first computing node includes a first shared memory, and the second computing node includes a second shared memory. In response to receiving a first query request for target data, the first computing node collects statistical information related to the target data. The first computing node stores the collected statistical information as first statistical information in the first shared memory, to update global statistical information in the first shared memory, and sends the first statistical information to the second computing node, for the second computing node to store the first statistical information in the second shared memory, to update global statistical information in the second shared memory. The global statistical information is used to query for statistical information for a query request of the system. According to an embodiment of this disclosure, because statistical information collected for querying of target data on a particular computing node can be shared with another computing node, timeliness of the statistical information can be ensured, and a large quantity of repeated collections can be avoided. This significantly reduces computing overheads.

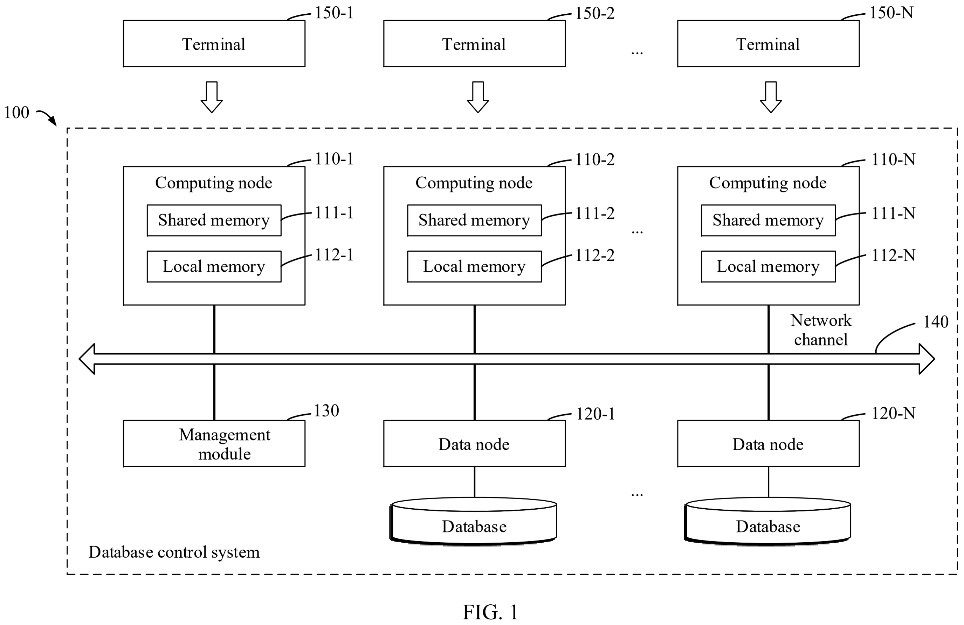

FIG. 1 is a diagram of an example architecture of a database system according to an embodiment of this disclosure. As shown in FIG. 1, a database system 100 includes a plurality of computing nodes: 110-1 to 110-N (which are sometimes collectively referred to as a "computing node 110"), a plurality of data nodes: 120-1 to 120-N (which are sometimes collectively referred to as a "data node 120"), a management module 130, and a network channel 140. In this embodiment of this disclosure, the database system 100 may be an implementation of a data query system. In this embodiment of this disclosure, the computing node 110 includes, for example, a coordinator (Coordinator), which may be used as a service ingress and a result return egress of the database system 100, for example, receiving a query request of a service application from a terminal, and performing decomposition, scheduling, and slicing of a query task in parallel. In this embodiment of this disclosure, the computing node 110 includes, for example, a shared memory 111 and a local memory 112. Data stored in the shared memory may be visible to all processes running on the computing node 110, for invocation by all the processes, and data stored in the local memory is visible to only a process associated with the local memory, for invocation by only the process. In this embodiment of this disclosure, the shared memory (Shared Memory) is a physical or logically independent physical memory or virtual memory that can be accessed by a plurality of processes on a node including the shared memory, and may cache data to implement communication between a plurality of processes, so that even if the data or an address cached in the shared memory changes, the data or the address is visible to all the processes on the node. It should be understood that the term "computing node" represents a computing resource used for data processing, for example, may be implemented by a graphics processing unit (Graphics Processing Unit, GPU), a central processing unit (Central Processing Unit, CPU), or the like. It should be understood that a type and an implementation of the computing resource are not limited thereto, provided that the computing resource is a computing resource suitable for database processing. In this embodiment of this disclosure, the data node 120 is configured to store data and information related to the data, such as statistical information. In some embodiments, the data node may be, for example, a logical entity that performs slicing of a query task, and is associated with a database as a storage resource, for the computing node 110 to provide required data. In some embodiments, the database may support storage manners such as row storage, column storage, and hybrid storage. In this embodiment of this disclosure, the management module 130 is, for example, used for maintenance, management, and control of the database system 100. In some embodiments, the management module 130 may include: for example, an operation manager (Operation Manager), configured to provide a management interface or tool for routine operation, maintenance, and configuration management; a cluster manager (Cluster Manager), configured to manage and monitor running statuses of functional units and physical resources in the database system 100, to ensure stable running of the system; a global transaction manager (Global Transaction Manager), configured to provide information required for global transaction management, for example, may use a multi-version concurrency control mechanism; and a workload manager (Workload Manager), configured to control allocation of a system resource, to avoid service congestion and system breakdown caused by excessive service load. It should be understood that an entire management module 130 or a part of the management module 130 may be independent nodes, or may be deployed on a plurality of computing nodes 110 in a distributed manner. This is not limited in this disclosure. In this embodiment of this disclosure, the network channel 140, for example, connects the computing node 110, the data node 120, and the management module 130 to each other, so that the computing node 110, the data node 120, and the management module 130 can communicate with each other. A specific means of the network channel 140 may be implemented in wired or wireless communication. In some embodiments, for example, the network channel 140 may include, for example, a local area network (LAN), a wide area network (WAN), an Internet, a virtual LAN (VLAN), an enterprise LAN, a layer 3 virtual private network (VPN), an intranet, or any combination thereof. This is not limited in this disclosure.

In this embodiment of this disclosure, the database system 100 may perform, for example, wired or wireless communication with a plurality of terminals: 150-1 to 150-N (sometimes collectively referred to as a "terminal 150") through a network. In some embodiments, the terminal 150 may include a service application, to send a data query request to the database system 100 or receive queried data from the database system 100. In some embodiments, the terminal 150 may be one or more suitable mobile or non-mobile computing devices configured to provide data inputs or receive data feedbacks. In some embodiments, the terminal 150 may have data collection, processing, and output functions, for example, the functions are implemented by an input/output (I/O) apparatus like a recorder, a camera, a video camera, a mouse, a keyboard, or a display. In some embodiments, the terminal 150 may run various software applications such as productivity or office support software, web browsing software, camera software, and software used to support a voice call, a video conference, and an email.

For ease of description, the following describes the data query method in embodiments of this disclosure by using terms "first computing node" and "second computing node". It should be understood that the first computing node or the second computing node may be any node in the plurality of computing nodes 110, and may be an independent computing node, or may be a cluster of a plurality of computing nodes. For ease of description, the terms "first shared memory", "second shared memory", "first local memory", and "second local memory" are used to describe the data query method in embodiments of this disclosure. It should be understood that the first shared memory included in the first computing node or the second shared memory included in the second computing node may be the shared memory 111 in the computing node 110, and may be physically independent memory space, or may be virtual memory space. In addition, the first local memory included in the first computing node or the second local memory included in the second computing node may be the local memory 112 in the computing node 110, and may be physically independent memory space, or may be virtual memory space.

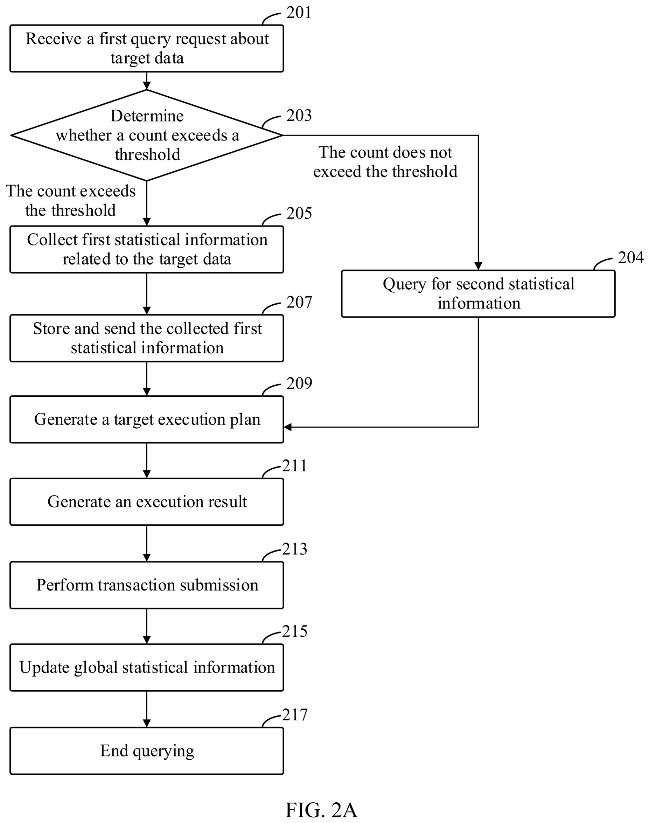

FIG. 2A is an example diagram of a data query method according to an embodiment of this disclosure. At a block 201, in response to receiving a first query request about target data, a first computing node performs lexical parsing and semantic parsing on a query statement of the received first query request, to generate a syntax tree associated with the query request. At a block 203, in response to receiving the syntax tree associated with the first query request, the first computing node determines whether a statement execution count of a data table related to the target data exceeds a predetermined threshold. In this embodiment of this disclosure, the predetermined threshold may be any value provided that the value can be used to determine whether statistical information is outdated. At a block 205, in response to determining that the statement execution count exceeds the predetermined threshold, the first computing node collects statistical information related to the target data. At a block 207, the first computing node stores the collected statistical information as first statistical information in a first shared memory, to update global statistical information in the first shared memory, and sends the first statistical information to a second computing node, for the second computing node to store the first statistical information in a second shared memory, to update global statistical information in the second shared memory. Correspondingly, in response to receiving the first statistical information sent by the first computing node, the second computing node stores the first statistical information in the second shared memory, to update the global statistical information in the second shared memory. In this embodiment of this disclosure, the global statistical information is used to query for statistical information for a query request of the database system 100. In some embodiments, the global statistical information is used to query for statistical information for the first query request and a query request other than the first query request (for example, another query request for the first computing node and a query request for the second computing node). In some embodiments, for the first query request, the first computing node may directly query the global statistical information for the first statistical information about the target data and invoke the first statistical information about the target data, to generate an execution plan. In some embodiments, when the first computing node receives a query request related to the target data other than the first query request, the first computing node may directly query the global statistical information for the first statistical information about the target data and invoke the first statistical information about the target data, to generate an execution plan. For example, in this case, the first computing node may generate the execution plan that is substantially the same as the execution plan generated for the first query request. In some embodiments, when the second computing node receives a query request about the target data, the second computing node may directly query the global statistical information for the first statistical information about the target data and invoke the first statistical information about the target data, to generate an execution plan. For example, in this case, the second computing node may generate the execution plan that is substantially the same as the execution plan generated by the first computing node for the first query request. At a block 209, the first computing node generates a target execution plan based on the syntax tree and the first statistical information about the target data. In some embodiments, in parallel or additionally with generating the target execution plan, the first computing node further performs at least one of the following: indicating that the first statistical information is newly collected for the target data; indicating that the target execution plan is generated based on the first statistical information newly collected for the target data; indicating a quantity of first statistical information that is included in the target execution plan and that is related to the target data; and indicating a quantity of statistical information that is in the target execution plan and that is newly collected for the target data. At a block 211, the first computing node obtains the target data from a data node based on the target execution plan, and generates an execution result including the target data. At a block 213, the first computing node performs transaction submission for the first query request in response to generating the execution result. At a block 215, the first computing node updates the global statistical information in the first shared memory based on a pointer of the first statistical information in the first shared memory. Correspondingly, the second computing node updates the global statistical information in the second shared memory based on a pointer of the first statistical information in the second shared memory. In some embodiments, in response to performing the transaction submission, the first computing node updates the global statistical information in the first shared memory, and sends an indication about the transaction submission to the second computing node. In some embodiments, the second computing node updates the global statistical information in the second shared memory in response to receiving the indication about the transaction submission from the first computing node. At a block 217, the first computing node sends the execution result to a query requester, and ends query processing. In some embodiments, after query processing ends, the first statistical information, the execution plan, or the execution result is sent to the data node 120 for storage by the data node 120.

In some embodiments, the query statement may be, for example, based on a structured query language (Structured Query Language, SQL) statement, to query for the target data in the database, to obtain the target data from the database. In some embodiments, data insertion, modification, and deletion, for example, inserting a new record in the database, modifying data in the database, deleting a record from the database, creating a new database, creating a new table in the database, creating a storage procedure in the database, creating a view in the database, and setting permissions of the table, the storage procedure, and the view, may be further performed on the database by using the SQL statement. In some embodiments, the statement execution count indicates a quantity of records that change after statement insertion, statement deletion, or statement modification is performed for a data table related to the target data. In some embodiments, lexical parsing is, for example, converting an input SQL statement from a character string into a formatted structure according to an agreed SQL statement rule. In some embodiments, semantic parsing is, for example, converting a formatted structure output through lexical parsing into an object that can be recognized by the database. In some embodiments, the syntax tree may be, for example, an abstract syntax tree (Abstract Syntax Tree, AST), which represents a structure of a programming language in a tree-like form, and each node of the tree represents a structure in source code.

In some embodiments, the execution plan may include, for example, information such as a query sequence, data node index information, and data index information, to execute a query statement based on an execution path planned in the execution plan to perform data query, so as to obtain the target data and generate the execution result including the target data. For example, the execution plan may be a node tree that displays detailed steps performed when the database executes the SQL statement, where each step is a database operator. In some embodiments, a specific execution plan generated for each query can be viewed using an EXPLAIN command. In this embodiment of this disclosure, in the specific execution plan, at least one of the following can be displayed: the first statistical information is newly collected for the target data; the target execution plan is generated based on the first statistical information newly collected for the target data; the quantity of first statistical information that is included in the target execution plan and that is related to the target data; and the quantity of statistical information that is in the target execution plan and that is newly collected for the target data. In some embodiments, the statistical information may include, for example, table statistical information about a data table, column statistical information about a data table, index statistical information about data, system statistical information about system performance, and the like that represent eigenvalues of the data table. In some embodiments, the table statistical information may include, for example, a quantity of rows, a quantity of blocks, and an average row length. The column statistical information may include, for example, a quantity of unique values in a column, a quantity of NULL values, and data distribution. The index statistical information may include, for example, a quantity of leaf blocks, a level, and a clustering factor. The system statistical information may include, for example, performance and usage of a processor, and performance and usage of an input/output device. It should be understood that a specific parameter or variable included in the statistical information is not limited thereto, provided that the statistical information is information related to generation of an execution plan.

According to an embodiment of this disclosure, because statistical information that is collected by a single node and that has timeliness is shared with another computing node, and is stored in a shared memory that is on each computing node and that is visible to all processes, only a pointer of the statistical information in the shared memory is provided for each process, so that latest synchronization of statistical information in an entire database system can be implemented. In this way, consistency of query plans in the entire database system is ensured, and performance jitter is reduced.

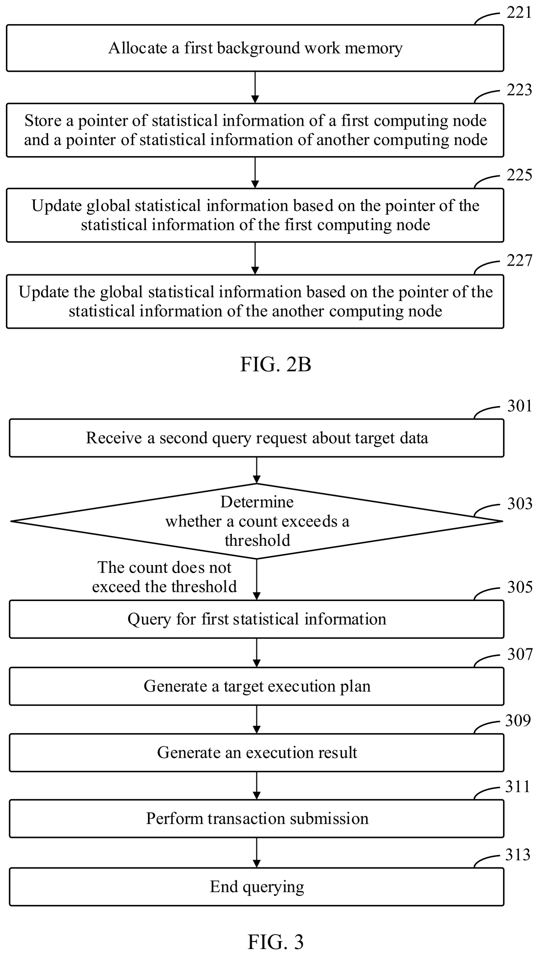

In this embodiment of this disclosure, the first computing node further executes a first background work thread. FIG. 2B is a further example diagram of the data query method according to an embodiment of this disclosure. At a block 221, a first background work memory is allocated for the first background work process. At a block 223, the first computing node stores, in the first background work memory, a pointer that is of the statistical information, collected by the first computing node, and that is in the first shared memory, and a pointer that is of statistical information, received by the first computing node from another computing node in the plurality of computing nodes, and that is in the first shared memory. At a block 225, in response to performing the transaction submission for the statistical information collected by the first computing node, the first background work thread updates the global statistical information in the first shared memory based on the pointer that is of statistical information, collected by the first computing node, and that is in the first shared memory. In some embodiments, processing at the block 225 may be performed in the manner of processing at the block 215 shown in FIG. 2A. At a block 227, in response to performing the transaction submission for the statistical information received from the another computing node in the plurality of computing nodes, the first background work thread updates the global statistical information in the first shared memory based on the pointer that is of the statistical information, received by the first computing node from the another computing node in the plurality of computing nodes, and that is in the first shared memory. Therefore, statistical information of each computing node is stored in a lock-free queue in the allocated first background work memory by using the first background work process. This does not affect a current query process, so that impact on overall performance of the first computing node can be avoided.

In this embodiment of this disclosure, the first computing node further executes a second background work thread, and allocates a second background work memory for the second background work process. In some embodiments, the second background work process checks, at predetermined time, whether a statement execution count for each data table in a statistical information system table exceeds a second predetermined threshold. In some embodiments, for a data table whose statement execution count exceeds the second predetermined threshold in the statistical information system table, statistical information related to the data table is collected. In some embodiments, the first computing node updates the statistical information system table based on the collected statistical information related to the data table, where the statistical information system table is stored in the second background work memory. Therefore, the second background operation checks the statistical information of the data table in a polling manner, to avoid poor timeliness caused by the related data not being queried for long time.

In some embodiments, at a block 204, in response to receiving the first query request for the target data, the first computing node determines that the statement execution count does not exceed the predetermined threshold, and queries for second statistical information that is used as statistical information for the target data. In some embodiments, at the block 209, the first computing node generates the target execution plan based on the found second statistical information. In some embodiments, at the block 211, the first computing node generates the execution result for the target data based on the target execution plan. In some embodiments, at the block 213, the first computing node performs the transaction submission for the first query request in response to generating the execution result. In some embodiments, the global statistical information may not be updated, but the execution result is directly sent to the query requester, and query processing ends. In some embodiments, the first computing node performs the transaction submission for the first query request in response to generating the execution result. Therefore, when the statistical information is not outdated, the existing statistical information can be directly used to generate the execution plan, to improve query efficiency of the database. In some embodiments, querying for the second statistical information further includes: The first computing node queries the first local memory for the second statistical information; the first computing node queries the first background work memory for the second statistical information in response to the second statistical information being not found in the first local memory; the first computing node queries the first shared memory for the second statistical information in response to the second statistical information being not found in the second background work memory, for example, queries the global statistical information in the first shared memory for the first statistical information; and the first computing node queries the second background work memory for the second statistical information in response to the second statistical information being not found in the first shared memory. In some embodiments, querying for the second statistical information further includes: The first computing node queries the first local memory for the second statistical information; the first computing node queries the first shared memory for the second statistical information in response to the second statistical information being not found in the first local memory, for example, querying the global statistical information in the first shared memory for the first statistical information; and the first computing node queries the second background work memory for the second statistical information in response to the second statistical information being not found in the first shared memory. In this way, statistical information can be hierarchically queried for, and statistical information that is latest in timeliness can be found preferentially and quickly, to improve query efficiency of the database.

In some embodiments, the pointer of the statistical information in the first shared memory is further stored in the first shared memory. In some embodiments, at the block 215, updating the global statistical information in the first shared memory includes: deleting, from the global statistical information in the first shared memory, the statistical information related to the target data, and adding the pointer of the statistical information in the first shared memory to the global statistical information in the first shared memory. In some embodiments, the first computing node creates a first process based on the first query request, allocates the first local memory for the first process, and stores, in the first local memory, the pointer of the statistical information in the first shared memory. Therefore, in a local memory of a current query process, only a pointer of statistical information in a shared memory is stored, so that a required operation can be implemented. This avoids a case in which the statistical information is cleared when the current query process ends.

In some embodiments, after query processing for the first query request ends, the plurality of computing nodes including the first computing node and the second computing node send the first statistical information to a plurality of data nodes corresponding to the plurality of computing nodes, so that each data node stores statistical information that is in the first statistical information and that corresponds to each data node, for subsequent query processing. In this way, the statistical information and a data status of the data node can be kept up to date with the statistical information and a data status of the computing node while keeping consistency.

FIG. 3 is an example diagram of another data query method according to an embodiment of this disclosure. FIG. 3 further shows a case in which the first computing node receives a second query request about the target data after updating the global statistical information in the first shared memory based on the pointer of the first statistical information in the first shared memory shown in FIG. 2. At a block 301, in response to receiving the second query request about the target data, the first computing node performs lexical parsing and semantic parsing on a query statement of the received second query request, to generate a syntax tree associated with the query request. At a block 303, in response to receiving the syntax tree associated with the second query request, whether the statement execution count of the data table related to the target data exceeds the predetermined threshold is determined. At a block 305, the first computing node queries for the first statistical information in response to determining that the statement execution count does not exceed the predetermined threshold. At a block 307, the first computing node generates a target execution plan based on the syntax tree and the found first statistical information about the target data, where the target execution plan generated for the second query request is substantially the same as the target execution plan generated for the first query request. At a block 309, the first computing node obtains the target data from a data node based on the target execution plan, and generates an execution result including the target data. At a block 311, the first computing node performs transaction submission for the first query request in response to generating the execution result. At a block 313, the first computing node sends the execution result to a query requester, and ends query processing. Therefore, in a case in which a current computing node has updated global statistical information based on statistical information that is about the target data and that is collected by the computing node, and then receives another query request about the target data, if timeliness of the statistical information about the target data is good, the current computing node may not need to collect statistical information again, but can directly use latest statistical information, to effectively improve query efficiency of the database.

In some embodiments, at a block 305, in response to receiving the second query request for the target data, the first computing node determines whether the statement execution count of the data table related to the target data exceeds the predetermined threshold. In some embodiments, the first computing node queries for the first statistical information in response to the statement execution count not exceeding the predetermined threshold. In some embodiments, the first computing node generates the target execution plan based on the found first statistical information. In some embodiments, querying for the first statistical information further includes: The first computing node queries the first local memory for the first statistical information; the first computing node queries a first background work memory for the first statistical information in response to the first statistical information being not found in the first local memory; the first computing node queries the first shared memory for the first statistical information in response to the first statistical information being not found in a second background work memory, for example, queries the global statistical information in the first shared memory for the first statistical information; and the first computing node queries the second background work memory for the first statistical information in response to the first statistical information being not found in the first shared memory. In some embodiments, querying for the first statistical information further includes: The first computing node queries the first local memory for the first statistical information; the first computing node queries the first shared memory for the first statistical information in response to the first statistical information being not found in the first local memory, for example, querying the global statistical information in the first shared memory for the first statistical information; and the first computing node queries a second background work memory for the first statistical information in response to the first statistical information being not found in the first shared memory. In this way, statistical information can be hierarchically queried for, and statistical information that is latest in timeliness can be found preferentially and quickly, to improve query efficiency of the database.

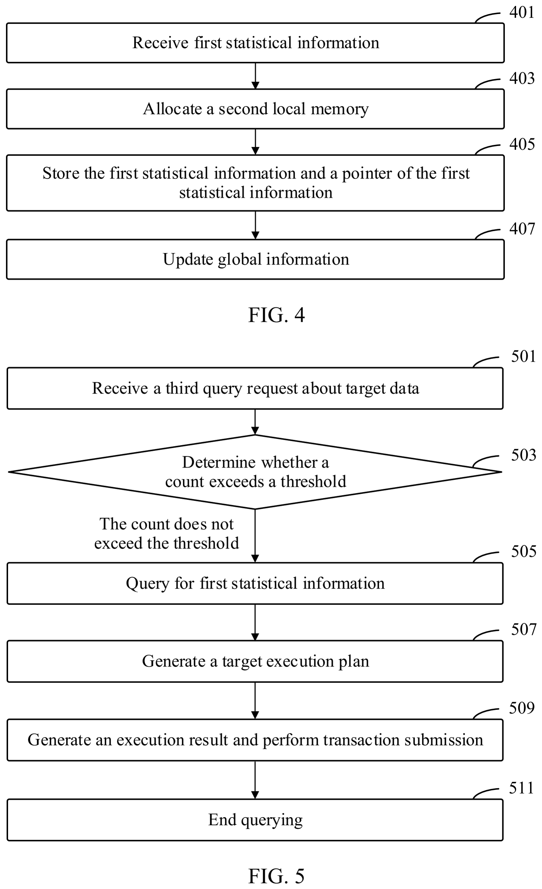

FIG. 4 is an example diagram of still another data query method according to an embodiment of this disclosure. In the example of FIG. 2 described herein, the second computing node stores the first statistical information in the second shared memory in response to receiving the first statistical information sent by the first computing node, and the second computing node updates the global statistical information in the second shared memory based on the pointer of the first statistical information in the second shared memory. The following provides specific descriptions with reference to FIG. 4. At a block 401, the second computing node creates a second process in response to receiving the first statistical information sent by the first computing node. At a block 403, the second computing node allocates a second local memory for the second process. At a block 405, the first statistical information sent by the first computing node and the pointer of the first statistical information in the second shared memory are stored in the second shared memory, and the pointer that is of the first statistical information, sent by the first computing node, and that is in the second shared memory is stored in the second local memory. At a block 407, the second computing node receives an indication of the transaction submission from the first computing node, and updates the global statistical information in the second shared memory based on the pointer of the first statistical information in the second shared memory. In some embodiments, the second computing node deletes, from the global statistical information in the second shared memory, the statistical information related to the target data, and adds the pointer of the first statistical information in the second shared memory to the global statistical information in the second shared memory. Therefore, a single computing node may store, in a shared memory that is of the computing node and that is visible to all processes, statistical information that is shared by another computing node and that has timeliness, so that the computing node can obtain latest statistical information for subsequent query processing, without collecting the statistical information. In this way, latest synchronization of the statistical information of the entire database system can be implemented, so that consistency of the query plans of the entire database system is ensured, and occurrence of performance jitter is reduced.

FIG. 5 is an example diagram of still another data query method according to an embodiment of this disclosure. At a block 501, the second computing node receives a third query request for the target data from the terminal 150. At a block 503, in response to receiving the third query request for the target data, whether the statement execution count of the data table related to the target data exceeds the predetermined threshold is determined. At a block 505, in response to determining that the statement execution count does not exceed the predetermined threshold, the second computing node queries for the first statistical information received from the first computing node. At a block 507, the second computing node generates a target execution plan for the third query request based on the found first statistical information, where the target execution plan generated for the second query request is substantially the same as the target execution plan generated for the first query request. In some embodiments, when the second computing node receives a query request about the target data, the second computing node may directly query the global statistical information for the first statistical information about the target data and invoke the first statistical information about the target data, to generate an execution plan. For example, in this case, the second computing node may generate the execution plan that is substantially the same as the execution plan generated for the first query request by the first computing node. At a block 509, the second computing node performs transaction submission for the third query request in response to generating the execution result. At a block 511, the second computing node sends the execution result to a query requester, and ends query processing for the third query request. Therefore, in a case in which a current computing node has updated global statistical information based on statistical information that is about the target data and that is obtained by the computing node from another computing node through sharing, and then receives another query request about the target data, if timeliness of the statistical information about the target data is good, the current computing node may not need to collect statistical information again, but can directly use latest statistical information, to effectively improve query efficiency of the database.

According to the data query solution of this embodiment of this disclosure, in response to receiving the first query request for the target data, the first computing node collects the statistical information related to the target data. The first computing node stores the collected statistical information as the first statistical information in the first shared memory, to update the global statistical information in the first shared memory, and sends the first statistical information to the second computing node, for the second computing node to store the first statistical information in the second shared memory, to update the global statistical information in the second shared memory. The global statistical information is used to query for the statistical information for the query request of the system. According to an embodiment of this disclosure, because statistical information collected for querying of target data on a particular computing node can be shared with another computing node, timeliness of the statistical information can be ensured, and a large quantity of repeated collections can be avoided. This significantly reduces computing overheads.

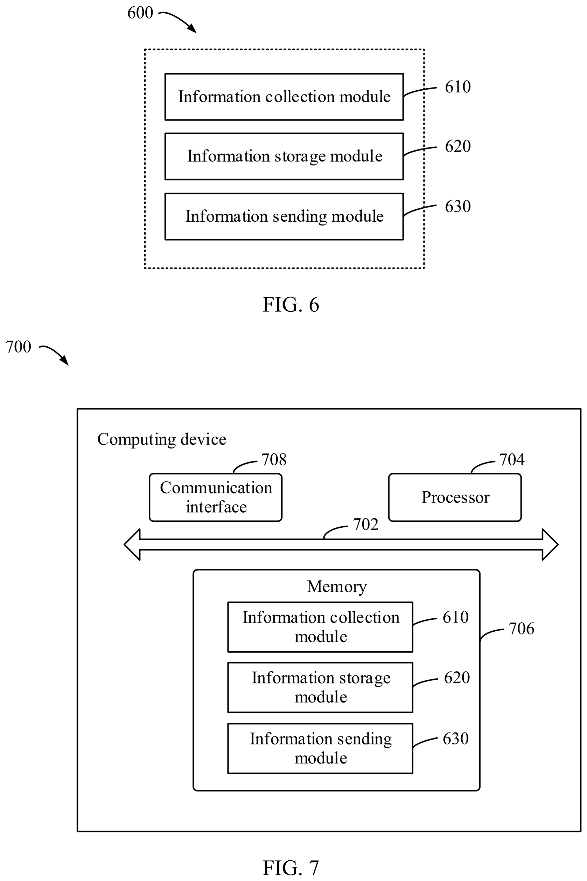

FIG. 6 is a block diagram of a data query apparatus according to some embodiments of this disclosure. In embodiments of this disclosure, a data query system may include a plurality of computing nodes, the plurality of computing nodes include a first computing node and a second computing node, the first computing node includes a first shared memory, the second computing node includes a second shared memory, and the data query system may include a data query apparatus. As shown in FIG. 6, a data query apparatus 600 includes an information collection module 610, an information storage module 620, and an information sending module 630. In embodiments of this disclosure, the modules or nodes in the data query system may be implemented by using software or hardware. In embodiments of this disclosure, an entire or a part of each module in modules in the data query system may be distributed in any manner on at least a part of the plurality of computing nodes in the data query system. For example, the following describes implementations of the data query system and the data query module 600.

In some embodiments, in response to receiving a first query request for target data, the information collection module 610 collects statistical information related to the target data. In some embodiments, the information storage module 620 stores the collected statistical information as first statistical information in the first shared memory, to update global statistical information in the first shared memory. In some embodiments, the information sending module 630 sends the first statistical information to the second computing node, for the second computing node to store the first statistical information in the second shared memory, to update global statistical information in the second shared memory. The global statistical information is used to query for statistical information for a query request of the data query system.

In some embodiments, the data query apparatus 600 further includes a plan generation module. In some embodiments, in response to receiving the first query request for the target data, the information collection module 610 determines whether a statement execution count of a data table related to the target data exceeds a predetermined threshold, and collects the first statistical information in response to determining that the statement execution count exceeds the predetermined threshold. In some embodiments, the plan generation module generates a target execution plan based on the first statistical information. In some embodiments, the plan generation module performs at least one of the following: indicating that the first statistical information is newly collected for the target data; indicating that the target execution plan is generated based on the first statistical information newly collected for the target data; indicating a quantity of first statistical information that is included in the target execution plan and that is related to the target data; and indicating a quantity of statistical information that is in the target execution plan and that is newly collected for the target data. Therefore, it can be learned whether the computing node collects latest statistical information and specific content of the latest statistical information for target data in a query request.

In some embodiments, the data query apparatus 600 further includes a result generation module. In some embodiments, the result generation module generates an execution result for the target data based on the target execution plan, and performs transaction submission for the first query request in response to generating the execution result. In some embodiments, in response to performing the transaction submission, the result generation module updates the global statistical information in the first shared memory based on a pointer of the first statistical information in the first shared memory, and sends an indication about the transaction submission to the second computing node. In some embodiments, the second computing node updates the global statistical information in the second shared memory in response to receiving the indication about the transaction submission from the first computing node. In some embodiments, in response to receiving a second query request for the target data, the information collection module 610 determines whether a statement execution count of a data table related to the target data exceeds a predetermined threshold. In some embodiments, the data query apparatus 600 further includes an information query module. The information query module queries for the first statistical information in response to the statement execution count not exceeding the predetermined threshold. In some embodiments, the plan generation module generates a target execution plan based on the found first statistical information, where the target execution plan generated for the second query request is substantially the same as the target execution plan generated for the first query request. Therefore, in a case in which a current computing node has updated global statistical information based on statistical information that is about the target data and that is collected by the computing node, and then receives another query request about the target data, if timeliness of the statistical information about the target data is good, the current computing node may not need to collect statistical information again, but can directly use latest statistical information, to effectively improve query efficiency of the database.

In some embodiments, the information query module queries the first local memory for the first statistical information, queries a first background work memory for the first statistical information in response to the first statistical information being not found in the first local memory, queries the first shared memory for the first statistical information in response to the first statistical information being not found in a second background work memory, and queries the second background work memory for the first statistical information in response to the first statistical information being not found in the first shared memory. In some embodiments, the information query module queries the first local memory for the first statistical information, and queries the first shared memory for the first statistical information in response to the first statistical information being not found in the first local memory, and the first computing node queries the second background work memory for the first statistical information in response to the first statistical information being not found in the first shared memory. In this way, statistical information can be hierarchically queried for, and statistical information that is latest in timeliness can be found preferentially and quickly, to improve query efficiency of the database.

In some embodiments, the data query apparatus 600 further executes a first background work thread. In some embodiments, the data query apparatus 600 allocates a first background work memory for the first background work process, and stores, in the first background work memory, a pointer that is of the statistical information collected by the first computing node and that is in the first shared memory, and a pointer that is of statistical information received by the first computing node from another computing node in the plurality of computing nodes and that is in the first shared memory. Therefore, statistical information of each computing node is stored in a lock-free queue in the allocated first background work memory by using the first background work process. This does not affect a current query process, so that impact on overall performance of the first computing node can be avoided.

In some embodiments, the data query apparatus 600 further executes a second background work thread. In some embodiments, the data query apparatus 600 allocates a second background work memory for the second background work process. The second background work process checks, at predetermined time, whether a statement execution count for each data table in a statistical information system table exceeds a second predetermined threshold. For a data table whose statement execution count exceeds the second predetermined threshold in the statistical information system table, statistical information related to the data table is collected. The statistical information system table is updated based on the collected statistical information related to the data table, where the statistical information system table is stored in the second background work memory. Therefore, the second background operation checks the statistical information of the data table in a polling manner, to avoid poor timeliness caused by the related data not being queried for long time.

In some embodiments, in response to receiving the first query request for the target data, the information query module determines that the statement execution count does not exceed the predetermined threshold, and querying for second statistical information that is used as statistical information for the target data. In some embodiments, the plan generation module generates a target execution plan based on the found second statistical information. In some embodiments, the result generation module generates an execution result for the target data based on the target execution plan, and the first computing node performs transaction submission for the first query request in response to generating the execution result. Therefore, when the statistical information is not outdated, the existing statistical information can be directly used to generate the execution plan, to improve query efficiency of the database.

In some embodiments, the statement execution count indicates a quantity of records that change after statement insertion, statement deletion, or statement modification is performed for a data table related to the target data. In some embodiments, a pointer of the first statistical information in the first shared memory is further stored in the first shared memory. The information storage module 620 deletes, from the global statistical information in the first shared memory, the statistical information related to the target data, and adds the pointer of the first statistical information in the first shared memory to the global statistical information in the first shared memory. In this case, because statistical information that is collected by a single node and that has timeliness is shared with another computing node, and is stored in a shared memory that is on each computing node and that is visible to all processes, only a pointer of the statistical information in the shared memory is provided for each process, so that latest synchronization of statistical information in an entire database system can be implemented. In this way, consistency of query plans in the entire database system is ensured, and performance jitter is reduced.

In some embodiments, the data query apparatus 600 creates a first process based on the first query request, allocates the first local memory for the first process, and stores, in the first local memory, the pointer of the statistical information in the first shared memory. Therefore, in a local memory of a current query process, only a pointer of statistical information in a shared memory is stored, so that a required operation can be implemented. This avoids a case in which the statistical information is cleared when the current query process ends.

In some embodiments, the data query apparatus 600 further enables the second computing node to store the first statistical information in the second shared memory in response to receiving the first statistical information sent by the first computing node. The second computing node updates the global statistical information in the second shared memory based on the pointer of the first statistical information in the second shared memory. In some embodiments, the data query apparatus 600 further enables the second computing node to create a second process in response to receiving the first statistical information sent by the first computing node. The second computing node allocates a second local memory to the second process. The second computing node stores, in the second shared memory, the first statistical information sent by the first computing node and the pointer of the first statistical information in the second shared memory. The second computing node stores, in the second local memory, the pointer that is of the first statistical information sent by the first computing node and that is in the second shared memory. In some embodiments, the data query apparatus 600 further enables the second computing node to receive an indication about transaction submission from the first computing node. The second computing node deletes, from the global statistical information in the second shared memory, the statistical information related to the target data. The second computing node adds the pointer of the statistical information in the second shared memory to the global statistical information in the second shared memory. Therefore, a single computing node may store, in a shared memory that is of the computing node and that is visible to all processes, statistical information that is shared by another computing node and that has timeliness, so that the computing node can obtain latest statistical information for subsequent query processing, without collecting the statistical information. In this way, latest synchronization of the statistical information of the entire database system can be implemented, so that consistency of the query plans of the entire database system is ensured, and occurrence of performance jitter is reduced.

In some embodiments, the data query apparatus 600 further enables the second computing node to determine, in response to receiving a third query request for the target data, whether a statement execution count of a data table related to the target data exceeds a predetermined threshold. In response to determining that the statement execution count does not exceed the predetermined threshold, the second computing node queries for the first statistical information received from the first computing node, and generates a target execution plan for the third query request based on the found first statistical information. The target execution plan generated for the second query request is substantially the same as a target execution plan generated for the first query request. Therefore, in a case in which a current computing node has updated global statistical information based on statistical information that is about the target data and that is obtained by the computing node from another computing node through sharing, and then receives another query request about the target data, if timeliness of the statistical information about the target data is good, the current computing node may not need to collect statistical information again, but can directly use latest statistical information, to effectively improve query efficiency of the database.

The module included in the data query apparatus of the data query system is used as an example of a software functional unit. The data query system and/or the data query apparatus may include code running on a computing instance. The computing instance may be at least one of computing devices such as a physical host (computing device), a virtual machine, and a container. Further, there may be one or more computing devices. For example, the data query system and/or the data query apparatus may include code running on a plurality of hosts/virtual machines/containers. It should be noted that the plurality of hosts/virtual machines/containers used to run the application program may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit. The data query system and/or the data query apparatus may include at least one computing device like a server. Alternatively, the modules of the data query apparatus may be devices implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the data query system and/or the data query apparatus may be distributed in a same region, or may be distributed in different regions. The plurality of computing devices included in the data query system and/or the data query apparatus may be distributed in a same AZ, or may be distributed in different AZs. Similarly, the plurality of computing devices included in the data query system and/or the data query apparatus may be distributed in a same VPC, or may be distributed in multiple VPCs. The plurality of computing devices may be any combination of computing devices such as a server, an ASIC, a PLD, a CPLD, an FPGA, and a GAL.

An embodiment of this disclosure further provides a computing device 700. A node in this embodiment of this disclosure may include at least one computing device 700. FIG. 7 is a block diagram of an example device that may be used to implement an example implementation of this disclosure. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application. The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 7. However, it does not indicate that there is only one bus or only one type of bus. The bus 704 may include a path for information transmission between components (for example, the memory 706, the processor 704, and the communication interface 708) of the computing device 700. The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a mechanical hard disk drive (hard disk drive, HDD), or a solid-state drive (solid-state drive, SSD). The memory 706 stores executable program code, and the processor 704 executes the executable program code to separately implement the methods of the information collection module 610, the information storage module 620, and the information sending module 630 in the foregoing embodiments of this disclosure. That is, the memory 706 may store an instruction used for the method and the function in any one of the foregoing embodiments. The communication interface 708 uses a transceiver module, for example, but not limited to, a network interface card or a transceiver, to implement communication between the computing device 700 and another device or a communication network.

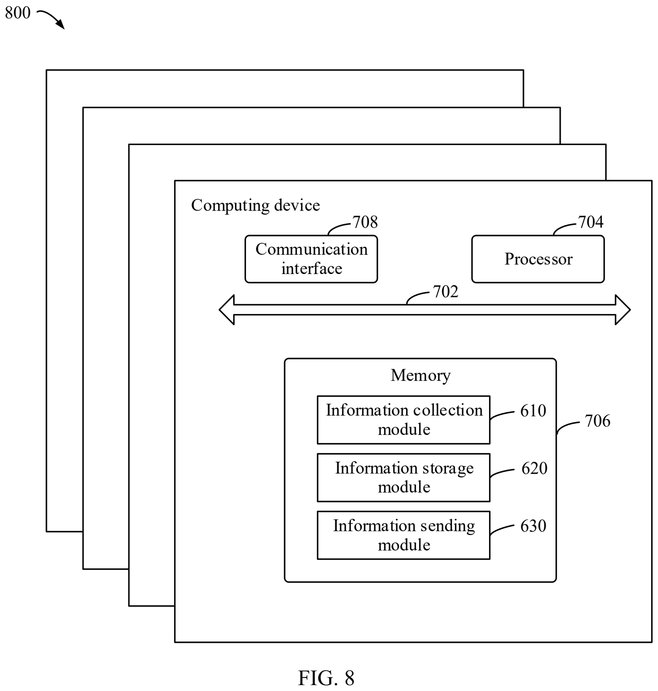

An embodiment of this disclosure further provides a computing device cluster 800. FIG. 8 shows a block diagram of an example device cluster that may be used to implement an example implementation of this disclosure. The database control system in embodiments of this disclosure is deployed on the computing device cluster 800, and the computing device cluster 800 includes at least one computing device 700. In some embodiments, the computing device cluster 800 may include one computing device 700 to implement all or a part of the database control system in embodiments of this disclosure. In some embodiments, the computing device cluster 800 may include a plurality of computing devices 700, and the plurality of computing devices may implement all or a part of the database control system in embodiments of this disclosure synchronously or asynchronously, serially or in parallel, or independently or distributedly. The computing device 700 in the computing device cluster 800 may be a server, for example, a central server, an edge server, or a local server in a local data center. In some embodiments, the computing device may alternatively be a terminal device, for example, a desktop computer, a notebook computer, or a smartphone. As shown in FIG. 8, the computing device cluster 800 includes at least one computing device 700. The memories 706 in one or more computing devices 700 in the computing device cluster 800 may store a same instruction used to perform the method and the function in any one of the foregoing embodiments. In some possible implementations, the memories 706 of the one or more computing devices 700 in the computing device cluster 800 may alternatively separately store some instructions used to perform the method and the function in embodiments of this disclosure in any one of the foregoing embodiments. In other words, a combination of the one or more computing devices 700 may jointly execute instructions for the method and the function in embodiments of this disclosure. It should be noted that the memories 706 in different computing devices 700 in the computing device cluster may store different instructions, and different instructions are separately used to perform some functions of the apparatus 700. That is, the instructions stored in the memories 706 in different computing devices 700 may implement functions of one or more modules or submodules of the information collection module 610, the information storage module 620, and the information sending module 630.

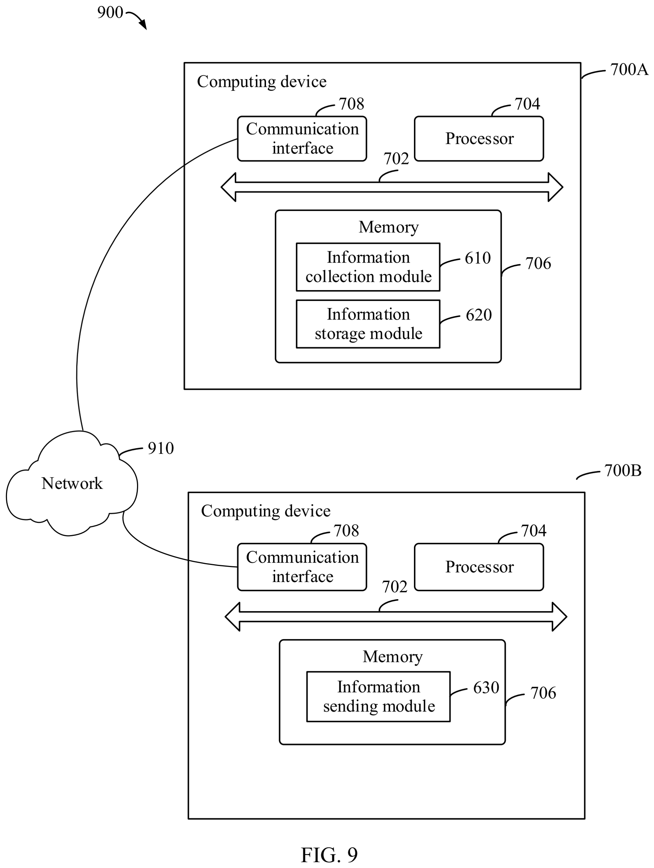

In some possible implementations, the one or more computing devices in the computing device cluster may be connected through a network. The network may be a wide area network, a local area network, or the like. FIG. 9 is a block diagram of another example device that may be used to implement an example implementation of this disclosure, where a possible implementation 900 is shown. As shown in FIG. 9, two computing devices 700A and 700B are connected through a network 910. A connection manner between computing device clusters shown in FIG. 9 may be that, in consideration of the method in this application, a large amount of user data needs to be stored and intensive real-time or near-real-time computing needs to be performed, and therefore, some functions are considered to be performed by the computing device 700B. It should be understood that functions of the computing device 700A shown in FIG. 9 may alternatively be completed by a plurality of computing devices 700. Similarly, functions of the computing device 700B may alternatively be completed by a plurality of computing devices 700.

In this embodiment of this disclosure, a computer program product including instructions is further provided. The computer program product may be software or a program product that includes instructions and that can be run on a computing device or that can be stored in any usable medium. When the computer program product runs on at least one computing device, the at least one computing device is enabled to perform the method and the function in any one of the foregoing embodiments.

In this embodiment of this disclosure, a computer-readable storage medium is further provided. The computer-readable storage medium may be any usable medium that can be accessed by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate the computing device to perform the method and the function in any one of the foregoing embodiments.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device, or a data storage device like a data center, including one or more usable media. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should be further noted that, the features and functions of two or more apparatuses according to this disclosure may be specific in one apparatus. Instead, features and functions of one apparatus described above may be further specific in a plurality of apparatuses.

The foregoing has described various implementations of this disclosure. The foregoing descriptions are examples, are not exhaustive, and are not limited to the disclosed implementations. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention. Many modifications and changes are clear to persons of ordinary skill in the art without departing from the scope and spirit of the described implementations. Selection of the terms used in this specification is intended to well explain principles of the implementations, actual applications, or improvements to technologies in the market, or to enable other persons of ordinary skill in the art to understand the implementations disclosed in this specification.

## Claims

1. A data query method, wherein the method is performed by a system comprising a plurality of computing nodes, the system comprises a first computing node and a second computing node, the first computing node comprises a first shared memory, the second computing node comprises a second shared memory, and the method comprises:
in response to receiving a first query request for target data, collecting, by the first computing node, statistical information related to the target data;
storing, by the first computing node, the collected statistical information as first statistical information in the first shared memory, to update global statistical information in the first shared memory; and
sending the first statistical information to the second computing node, for the second computing node to store the first statistical information in the second shared memory, to update global statistical information in the second shared memory, wherein
the global statistical information is used to query for statistical information for a query request of the system.

2. The data query method according to claim 1, wherein collecting the statistical information related to the target data further comprises:
in response to receiving the first query request for the target data, determining, by the first computing node, whether a statement execution count of a data table related to the target data exceeds a predetermined threshold; and
collecting, by the first computing node, the first statistical information in response to determining that the statement execution count exceeds the predetermined threshold.

3. The data query method according to claim 2, wherein the method further comprises:
generating, by the first computing node, a target execution plan based on the first statistical information; and
performing, by the first computing node, at least one of the following:
indicating that the first statistical information is newly collected for the target data;
indicating that the target execution plan is generated based on the first statistical information newly collected for the target data; and
indicating content that is of the first statistical information related to the target data and that is comprised in the target execution plan.

4. The data query method according to claim 2, wherein the method further comprises:
generating, by the first computing node, an execution result for the target data based on the target execution plan;
performing, by the first computing node, transaction submission for the first query request in response to generating the execution result;
in response to performing the transaction submission, updating, by the first computing node, the global statistical information in the first shared memory based on a pointer of the first statistical information in the first shared memory;
in response to performing the transaction submission, sending, by the first computing node, an indication about the transaction submission to the second computing node; and
updating, by the second computing node, the global statistical information in the second shared memory in response to receiving the indication about the transaction submission from the first computing node.

5. The data query method according to claim 1, wherein the method further comprises:
in response to receiving a second query request for the target data, determining, by the first computing node, whether a statement execution count of a data table related to the target data exceeds a predetermined threshold;
querying, by the first computing node, for the first statistical information in response to the statement execution count not exceeding the predetermined threshold; and
generating, by the first computing node, a target execution plan based on the found first statistical information, wherein the target execution plan generated for the second query request is substantially the same as a target execution plan generated for the first query request.

6. The data query method according to claim 5, wherein querying for the first statistical information further comprises:
querying, by the first computing node, the first local memory for the first statistical information;
querying, by the first computing node, a first background work memory for the first statistical information in response to the first statistical information being not found in the first local memory;
querying, by the first computing node, the first shared memory for the first statistical information in response to the first statistical information being not found in a second background work memory; and
querying, by the first computing node, the second background work memory for the first statistical information in response to the first statistical information being not found in the first shared memory.

7. The data query method according to claim 5, wherein querying for the first statistical information further comprises:
querying, by the first computing node, the first local memory for the first statistical information;
querying, by the first computing node, the first shared memory for the first statistical information in response to the first statistical information being not found in the first local memory; and
querying, by the first computing node, a second background work memory for the first statistical information in response to the first statistical information being not found in the first shared memory.

8. The data query method according to claim 1, wherein the first computing node further executes a first background work thread, and the method further comprises:
allocating, by the first computing node, a first background work memory for the first background work process; and
storing, in the first background work memory, a pointer that is of the statistical information collected by the first computing node and that is in the first shared memory, and a pointer that is of statistical information received by the first computing node from another computing node in the plurality of computing nodes and that is in the first shared memory.

9. The data query method according to claim 1, wherein the first computing node further executes a second background work thread, and the method further comprises:
allocating, by the first computing node, the second background work memory for the second background work process;
checking, by the second background work process at predetermined time, whether a statement execution count for each data table in the statistical information system table exceeds a second predetermined threshold;
for a data table that is in the statistical information system table and whose statement execution count exceeds the second predetermined threshold, collecting statistical information related to the data table; and
updating the statistical information system table based on the collected statistical information related to the data table, wherein the statistical information system table is stored in the second background work memory.

10. The data query method according to claim 1, wherein the method further comprises:
in response to receiving the first query request for the target data, determining, by the first computing node, that the statement execution count does not exceed a predetermined threshold, and querying for second statistical information that is used as statistical information for the target data;
generating, by the first computing node, a target execution plan based on the found second statistical information;
generating, by the first computing node, an execution result for the target data based on the target execution plan; and
performing, by the first computing node, transaction submission for the first query request in response to generating the execution result.

11. The data query method according to claim 1, wherein the statement execution count indicates a quantity of records that change after statement insertion, statement deletion, or statement modification is performed for a data table related to the target data.

12. The data query method according to claim 1, wherein a pointer of the first statistical information in the first shared memory is further stored in the first shared memory, and updating the global statistical information in the first shared memory comprises:
deleting, from the global statistical information in the first shared memory, the statistical information related to the target data; and
adding the pointer of the first statistical information in the first shared memory to the global statistical information in the first shared memory.

13. The data query method according to claim 1, wherein the method further comprises:
creating, by the first computing node, a first process based on the first query request;
allocating, by the first computing node, a first local memory for the first process; and
storing, by the first computing node in the first local memory, a pointer of the statistical information in the first shared memory.

14. The data query method according to claim 1, wherein the method further comprises:
storing, by the second computing node, the first statistical information in the second shared memory in response to receiving the first statistical information sent by the first computing node; and
updating, by the second computing node, the global statistical information in the second shared memory based on a pointer of the first statistical information in the second shared memory.

15. The data query method according to claim 14, wherein the method further comprises:
creating, by the second computing node, a second process in response to receiving the first statistical information sent by the first computing node;
allocating, by the second computing node, a second local memory for the second process;
storing, by the second computing node in the second shared memory, the first statistical information sent by the first computing node and the pointer of the first statistical information in the second shared memory; and
storing, by the second computing node in the second local memory, the pointer that is of the first statistical information sent by the first computing node and that is in the second shared memory.

16. The data query method according to claim 15, wherein the method further comprises:
receiving, by the second computing node, an indication about transaction submission from the first computing node;
deleting, by the second computing node from the global statistical information in the second shared memory, the statistical information related to the target data; and
adding, by the second computing node, the pointer of the statistical information in the second shared memory to the global statistical information in the second shared memory.

17. The data query method according to claim 15, wherein the method further comprises:
in response to receiving a third query request for the target data, determining, by the second computing node, whether a statement execution count of a data table related to the target data exceeds the predetermined threshold;
in response to determining that the statement execution count does not exceed the predetermined threshold, querying, by the second computing node, for the first statistical information received from the first computing node; and
generating a target execution plan for the third query request based on the found first statistical information, wherein the target execution plan generated for the third query request is substantially the same as a target execution plan generated for the first query request.

18. A data query system, wherein the data query system comprises a plurality of computing nodes, the plurality of computing nodes comprise a first computing node and a second computing node, the first computing node comprises a first shared memory, the second computing node comprises a second shared memory, the data query system comprises a data query apparatus, and the data query apparatus comprises:
an information collection module, configured to: in response to receiving a first query request for the target data, collect, for the first computing node, statistical information related to target data;
an information storage module, configured to store, for the first computing node, the collected statistical information as first statistical information in the first shared memory, to update global statistical information in the first shared memory; and
an information sending module, configured to send the first statistical information to the second computing node, for the second computing node to store the first statistical information in the second shared memory, to update global statistical information in the second shared memory, wherein
the global statistical information is used to query for statistical information for a query request of the data query system.

19. A computing device cluster, comprising at least one computing device, wherein each computing device comprises a processor and a memory, and the processor of the at least one computing device is configured to execute instructions stored in the memory of the at least one computing device, to enable the computing device cluster to perform the method according to any one of claims 1 to 17.

20. A computer-readable storage medium, wherein the computer-readable storage medium stores instructions, and when the instructions are executed by a computing device, the computing device is enabled to perform the method according to any one of claims 1 to 17.

21. A computer program product, wherein the computer program product comprises instructions, and when the instructions are executed by a computing device, the computing device is enabled to perform the method according to any one of claims 1 to 17.
